# EUROPEAN PATENT APPLICATION

(11) **EP 1 489 604 A1**
(43) Date of publication of application: **22.12.2004**
(21) Application number: 03013882.0
(22) Date of filing: 19.06.2003
(51) Int. Cl.: G11B 7/09, G11B 7/135

(54) **Method for detecting spherical aberration**

(71) Applicant: DEUTSCHE THOMSON-BRANDT GMBH, 78048 Villingen-Schwenningen (DE)
(72) Inventor: Knittel, Joachim, 78052 Vilingen (DE)
(74) Representative: Kurth, Dieter, Dipl.-Ing.

(57) **Abstract**

The present invention relates to a method for detecting spherical aberration in a light beam reflected from an optical recording medium.
A method according to the invention comprises the steps of:
- coupling out a first partial light beam and a second partial light beam from the light beam;
- generating a first push-pull signal (SA1) for the first partial light beam and a second push-pull signal (SA2) for the second partial light beam;
- inducing a first spherical aberration in the first partial light beam;
- inducing a second spherical aberration in the second partial light beam; and
- obtaining a spherical aberration error signal (SAE) from the first push-pull signal (SA1) and the second push-pull signal (SA2).

## Description

The present invention relates to a method and a device for detecting spherical aberration in a light beam reflected from an optical recording medium, and to an apparatus for reading from and/or writing to optical recording media using such method or device.

Next generation optical recording media systems, which use objective lenses with a high numerical aperture and multi-layered optical recording media, require devices for compensating spherical aberration. Spherical aberration occurs when the cover layer thickness of an optical recording medium deviates from its nominal value, i.e. in multi-layered systems or due to tolerances in the manufacturing process of the recording medium.

Methods for correcting the induced spherical aberrations, which are currently proposed, are telescopes or liquid crystal elements. To control such a spherical aberration compensation device, in a pickup the spherical aberration in the focal spot on the recording medium has to be detected and converted into a spherical aberration error (SAE) signal. At least two methods have been developed for generating a SAE signal: Ichimura I. et al.; Jpn. J. Appl. Phys. Vol. 39 (2000) p. 937 propose to look for a maximum signal amplitude while modulating the amount of spherical aberration introduced by the correction element, i.e. by moving the lenses of a telescope. This method can not be used with unrecorded media.
Shimano T. et al.; Jpn. J. Appl. Phys. Vol. 40 (2001) p. 2292 propose to generate the SAE by comparing two focus error signals, which are derived by splitting the light beam returning from the optical recording medium into two circular sections. However, additional detectors and a beam splitter are necessary, which increase the complexity of the pickup.

US 2002/0018409 discloses a device for detecting a tilt of an optical recording medium. An optical pickup comprises a diffraction grating, which generates 0-th order diffraction light and ±1st-order diffraction light, whereby each of said ±1st-order diffraction light has a phase distribution equivalent to a wavefront aberration of the optical recording medium when there is a tilt. The 0-th order diffraction light and the ±1st-order diffraction light reflected from the optical recording medium are detected by three detectors consisting of two detector elements each. For detecting coma induced by a tilt, the data signal amplitude envelope of the ±1st-order diffraction light is detected. The device is, therefore, only applicable to at least partially pre-recorded recording media.

It is an object of the invention to propose a method for detecting spherical aberration in a light beam reflected from an optical recording medium.

The above object is achieved by a method for detecting spherical aberration in a light beam, comprising the steps of:
- coupling out a first partial light beam and a second partial light beam from the light beam;
- generating a first push-pull signal for the first partial light beam and a second push-pull signal for the second partial light beam;
- inducing a first spherical aberration in the first partial light beam;
- inducing a second spherical aberration in the second partial light beam; and
- obtaining a spherical aberration error signal from the first push-pull signal and the second push-pull signal.
Inducing different amounts of spherical aberration in the partial beams allows to generate a spherical aberration signal from the obtained push-pull signals. The spherical aberration signal is obtained by simply subtracting the push-pull signals.

Advantageously, the first spherical aberration is a positive spherical aberration and the second spherical aberration is a negative spherical aberration. Preferably, the induced spherical aberration is equivalent to a spherical wavefront aberration generated by a defined cover layer thickness variation of an optical recording medium. This has the advantage that the spherical aberration error signal is symmetric with respect to zero deviation of the cover layer thickness from its nominal value.

Favourably, a grating is used for the coupling out of the first partial light beam and the second partial light beam. In this case preferably the first partial light beam is a +1st order diffracted light beam and the second partial light beam is a -1st order diffracted light beam.
In general optical pickups use the differential push-pull (DPP) method for tracking. Such pickups already have a diffraction grating, which generates three spots on an optical recording medium, i.e. a main spot (0th order) and two side spots (-1st order, +1st order). Furthermore, a detector system is provided. which generates a push-pull signal from each spot. The method is advantageously combined with this type of pickup by simply replacing the grating used for differential push-pull tracking with the diffraction grating according to the invention.

Advantageously the distance between the light beam and the first partial light beam and the second partial light beam on the optical recording medium is half a track pitch. This allows to increase the sensitivity of the measurement method. Due to a slight eccentricity of the recording medium, which is practically always present, the obtained push-pull signals are periodically modulated signals, whose amplitudes can be easily determined.

Favourably, a device for detecting spherical aberration in a light beam performs a method according to the invention.

An apparatus for reading from and/or writing to optical recording media preferably uses a method or a device according to the invention for detecting spherical aberration in a light beam.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:
- Fig. 1: shows the dependence of a push-pull signal amplitude on the spherical aberration;
- Fig. 2: schematically shows an optical pickup implementing the method according to the invention; and
- Fig. 3: shows the dependence of an error signal amplitude on the spherical aberration.

The basic idea of the invention is to compare the amplitude of two push-pull signals, which are generated by two additional side beams having an opposite amount of spherical aberration. The amplitude of the push-pull signal depends on the amount of aberration of the optical beam that illuminates the optical recording medium. Representing the spherical aberration by the Zernike coefficient W40, this opposite amount of spherical aberration is, for example, W40=±0.1. A cover-layer thickness variation of about 1 *µ*m corresponds to a coefficient W40 of about 0.02.

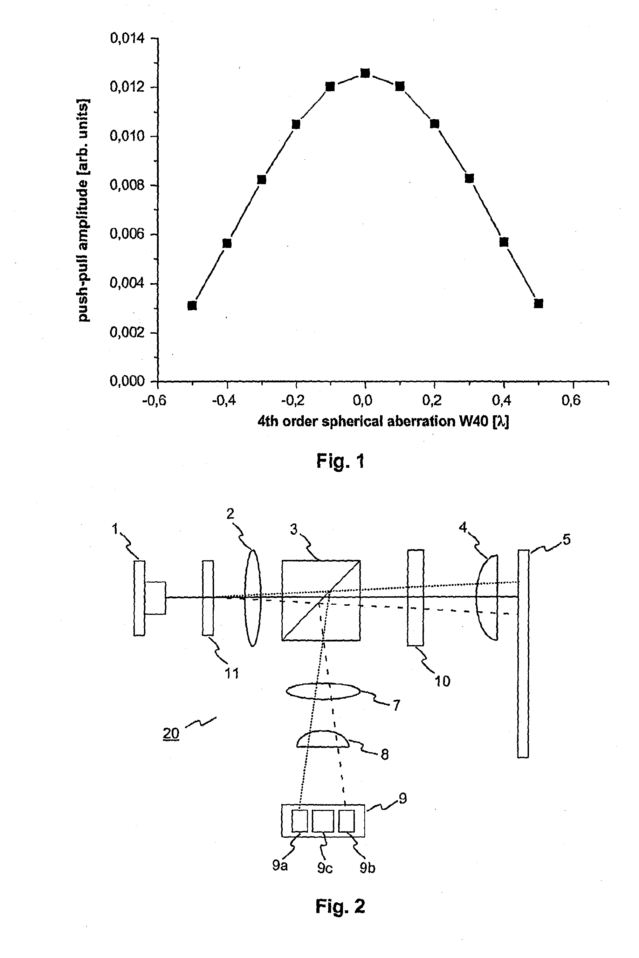

Fig. 1 shows the dependence of the amplitude of the push-pull signal on the 4^{th} order spherical aberration. The graph was obtained by a simulation. The system parameters are close to those of the so-called Blu-ray disk. As can be seen from the figure, in case there is no variation of the cover layer thickness, the amplitudes of the two push-pull signals are identical. If, however, spherical aberration caused by a variation of the cover layer thickness is present, e.g. W40=+0.1, the aberration of one of the side beams is increased, while the aberration of the other side beam is decreased or even compensated. This results in different amplitudes of the push-pull signal.

In Fig. 2 an optical pickup for reading from and/or writing to optical recording media implementing the method according to the invention is shown schematically. A laser diode 1 emits a light beam. For realizing the inventive method a diffraction grating 11 generates two additional side beams. The three beams are collimated by a collimator lens 2 and pass through a beam splitter cube 3 and a spherical aberration compensation device 10. They are then focussed onto a recording medium 5 by a focussing lens 4 held by an actuator (not shown). The light beams reflected from the recording medium 5 are collimated by the focussing lens 4 and directed in the direction of a further focusing lens 7 by the beam splitter cube 3. The further focusing lens focuses the beams onto a detector unit 9 having three detector elements 9a, 9b, 9c for the main beam and the side beams. Before impinging on the detector unit 9, the three beams pass through an astigmatic lens 8, which is required for obtaining a focus error signal in accordance with the astigmatism method. The pickup is almost identical to a standard pickup using the differential push-pull method for tracking. The main differences are that a special grating 11 is used, which will be described in the following section, and that an electronic circuit for measuring the push-pull amplitudes and for generating the error signal SAE (not shown in the figure) is present. No additional optical components are needed in a pickup using differential push-pull tracking. It is sufficient to replace the diffraction grating.

The grating 11 for generating the additional side beams has the following properties. The ±1st order diffraction light beams have phase distributions equivalent to a spherical wavefront aberration generated by a defined cover layer thickness variation (e.g. +2 *µ*m). The sign of the aberration of the +1st order light beam is positive (e.g. +1), whereas that of the -1st order is negative (e.g. -1). Of course, the sign can also be reversed for both light beams. No wavefront aberration is generated in the 0th order. Favourably, to increase the sensitivity of the measurement method, the distance between the main spot and the side spots on the recording medium 5 is half a track pitch.

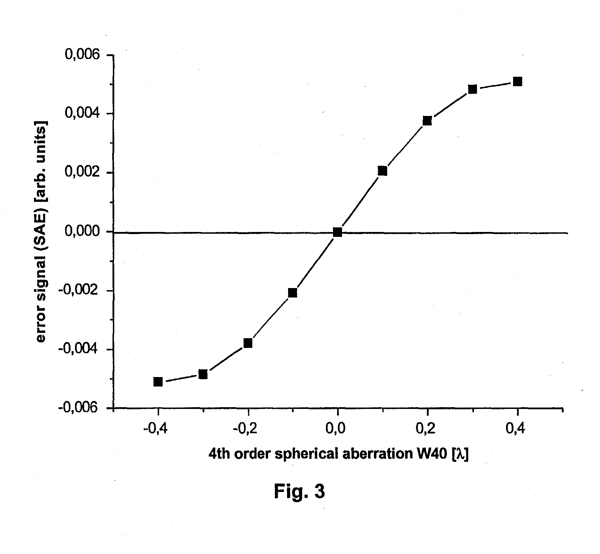

By comparing the amplitude of the push-pull signal SA1 of the +1st order light beam and the amplitude of the push-pull signal SA2 of the -1st order light beam an error signal SAE for the spherical aberration is generated. If no spherical aberration is present both amplitudes are equal, i.e. SA1=SA2. If spherical aberration is present, SA1 and SA2 differ from each other. This is shown in Fig. 3, where the spherical aberration error signal SAE=SA1-SA2 is plotted versus the forth order spherical aberration induced by the cover layer thickness. Again the graph was obtained by a simulation. The grating generates a spherical aberration of +0.1 for the +1st order and of -0.1 for the -1st order.

One method to measure the signals SA1 and SA2 is to operate the pickup with the actuator being in focus but not on track, i.e. while the tracking actuator is deactivated. Due to a slight eccentricity of the recording medium, which is practically always present, the obtained push-pull signals are periodically modulated signals, whose amplitudes can be easily determined.

## Claims

1. Method for detecting spherical aberration in a light beam, comprising the steps of:
- coupling out a first partial light beam and a second partial light beam from the light beam; and
- generating a first push-pull signal (SA1) for the first partial light beam and a second push-pull signal (SA2) for the second partial light beam;
**characterized in that** the method further comprises the steps of:
- inducing a first spherical aberration in the first partial light beam;
- inducing a second spherical aberration in the second partial light beam; and
- obtaining a spherical aberration error signal (SAE) from the first push-pull signal (SA1) and the second push-pull signal (SA2).

2. Method according to claim 1, **characterized in that** the first spherical aberration is a positive spherical aberration and the second spherical aberration is a negative spherical aberration.

3. Method according to claim 2, **characterized in that** the induced spherical aberration is equivalent to a spherical wavefront aberration generated by a defined cover layer thickness variation of an optical recording medium (5).

4. Method according to one of claims 1 to 3, **characterized in that** a grating (11) is used for the coupling out of the first partial light beam and the second partial light beam.

5. Method according to claim 4, **characterized in that** the first partial light beam is a +1st order diffracted light beam and the second partial light beam is a -1st order diffracted light beam.

6. Method according to one of claims 4 or 5, **characterized in that** a distance between the light beam and the first partial light beam and the second partial light beam on the optical recording medium (5) is half a track pitch.

7. Device for detecting spherical aberration in a light beam comprising a partial beam generating means 11 for generating a first partial light beam and a second partial light beam from the light beam, and a first detector element (9a) for generating a first push-pull signal (SA1) for the first partial light beam and a second detector element (9c) for generating a second push-pull signal (SA2) for the second partial light beam, **characterized in that** the partial beam generating means 11 induces a first spherical aberration in the first partial light beam and a second spherical aberration in the second partial light beam, and **in that** a spherical aberration error signal (SAE) is obtained from the first push-pull signal (SA1) and the second push-pull signal (SA2).

8. Device according to claim 7, **characterized in that** the first spherical aberration is a positive spherical aberration and the second spherical aberration is a negative spherical aberration.

9. Device according to claim 7 or 8, **characterized in that** the partial beam generating means 11 is a grating, and **in that** the first partial light beam is a +1st order diffracted light beam and the second partial light beam is a -1st order diffracted light beam.

10. Apparatus for reading from and/or writing to optical recording media, **characterized in that** it uses a method according to anyone of claims 1 to 6 or comprises a device according to anyone of claims 7 to 9 for detecting spherical aberration in a light beam.
